# EUROPEAN PATENT APPLICATION

(11) **EP 4 651 389 A1**
(43) Date of publication of application: **19.11.2025**
(21) Application number: 24176698.9
(22) Date of filing: 17.05.2024
(51) Int. Cl.: H04B 1/713, H04L 5/00, H04B 7/22, H04W 4/80, H04W 52/02

(54) **INTERNET OF THINGS DEVICE AND NODE**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP); MAKI, Shotaro, Osaka, 571-8501 (JP)
(74) Representative: Grünecker Patent- und Rechtsanwälte PartG mbB

(57) **Abstract**

Provided is a node, comprising a transceiver; and circuitry which, in operation, generates a carrier wave signal to be transmitted to an Internet of Thing, loT, device, wherein the circuitry, in operation, changes a value of a characteristic of the carrier wave signal at least between a first characteristic value and a second characteristic value during a modulation time interval, which defines a unit time interval for modulating the carrier wave signal to transmit data. Further, it is provided an loT device, comprising a transceiver which, in operation, receives a carrier wave signal, and circuitry, which in operation, generates a backscattering signal to be transmitted by backscattering the carrier wave signal, wherein the circuitry, in operation, changes a value of a characteristic of the backscattering signal at least between a first characteristic value and a second characteristic value within a modulation time interval, which defines a unit time interval for modulating the backscattering signal to transmit data.

## Description

### BACKGROUND

### 1. Technical field

The present disclosure relates to an loT device and its communication with a node, for example, a base station or an intermediate node connected to a base station.

### 2. Description of the Related Art

The Internet of things (IoT) market is a major source of revenue for future wireless technology and is a steadily growing market. Building, commercial, health, agriculture, infrastructure, and industries are some of the key sectors targeted by the loT market. Energy harvesting technology is a key to the success of the loT market as it can considerably reduce device operational costs. Ambient loT devices (energy harvesting devices) harvest energy from natural or ambient sources, for example, electromagnetic, solar, thermal or mechanical (pressure, vibration) sources, and operate either with a small battery or without battery. Alternatively, the A-loT device may harvest energy from a carrier wave (CW) signal, which is transmitted from a node, like a base station or an intermediate node, which performs communication with the A-loT device. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task particularly, since A-loT devices lack RRC states and ARQ and HARQ transmission protocols that ensure reliable data delivery, A-loT devices have limited power available resulting in reduced time periods of communication capability and A-loT devices are configured with specifically designed new operation states.

### SUMMARY

One non-limiting and exemplary embodiment facilitates an Internet of Things, loT, device communicating with a node.

In an embodiment, the techniques disclosed herein feature: A node, for example a base station or an intermediate node connected to a base station, comprising a transceiver and circuitry which, in operation, generates a carrier wave signal to be transmitted to an Internet of Thing, loT, device, wherein the circuitry, in operation, changes a value of a characteristic of the carrier wave signal at least between a first characteristic value and a second characteristic value during a modulation time interval, which defines a unit time interval for modulating the carrier wave signal to transmit data.

In another embodiment, the techniques disclosed herein feature: An Internet of Thing, loT, device, comprising a transceiver which, in operation, receives a carrier wave signal; and circuitry, which in operation, generates a backscattering signal to be transmitted by backscattering the carrier wave signal, wherein the circuitry, in operation, changes a value of a characteristic of the backscattering signal at least between a first characteristic value and a second characteristic value within a modulation time interval, which defines a unit time interval for modulating the backscattering signal to transmit data.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: illustrates a node-A-loT device topology;
- **Fig. 3**: illustrates another node-A-loT device topology;
- **Fig. 4**: illustrates an example of transmission and reception of a modulated carrier wave signal;
- **Fig. 5**: illustrates an exemplary implementation of the node-A-loT device topology shown in Fig.2;
- **Fig. 6a**: illustrates a first exemplary implementation of the node-A-loT device topology shown in Fig.3;
- **Fig. 6b**: illustrates a second exemplary implementation of the node-A-loT device topology shown in Fig.3;
- **Fig. 7**: illustrates an example of the transmission and reception of a modulated carrier wave signal according to the disclosure;
- **Fig. 8**: illustrates an example of the transmission of a carrier wave signal according to the disclosure;
- **Fig. 9**: illustrates an example of the transmission of a modulated carrier wave signal according to the disclosure;
- **Fig. 10**: illustrates a schematic transmission diagram for shifting a bandwidth of the carrier wave signal;
- **Fig. 11**: illustrates another schematic diagram for shifting a bandwidth of the carrier wave signal;
- **Fig. 12**: illustrates an example of a transmission of a modulated backscattered signal according to the disclosure;
- **Fig. 13**: illustrates a schematic transmission diagram for shifting a bandwidth of the backscattered signal;
- **Fig. 14**: illustrates a general, simplified and exemplary block diagram of an loT device and a node;
- **Fig. 15**: illustrates functional structure of the circuitries pertaining to the loT device and the base station; and
- **Fig. 16**: shows exemplary functional split options in 5G O-RAN.

### DETAILED DESCRIPTION

### 5G NR system architecture and protocol stacks

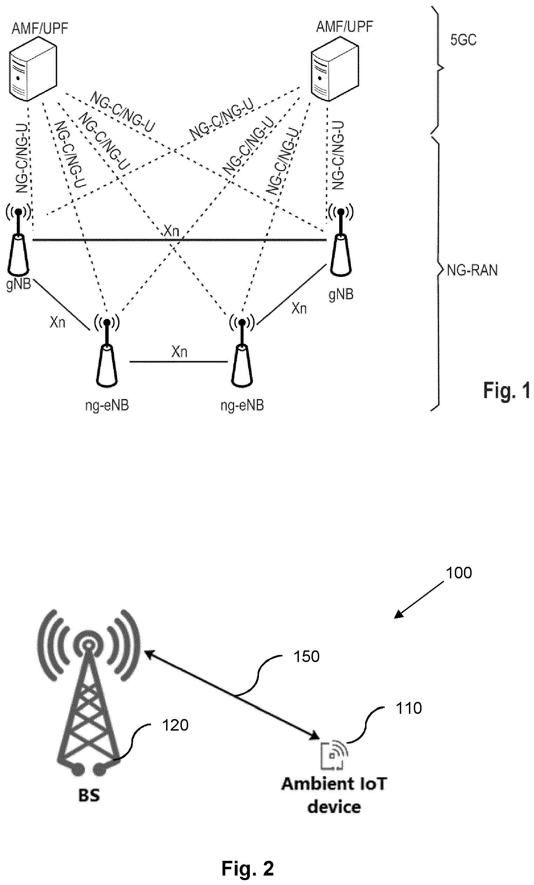

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

### Ambient IoT Device

An ambient loT device (A-loT device) is an energy harvesting device or terminal having a small battery or having no battery. An A-loT device may be an ultra-low complexity device with ultra-low power consumption for very-low end loT applications. Examples for A-loT devices include without any limitation wearables, smart home devices, automotive devices, sensors, smart keys, healthcare devices, etc.

A-loT devices lack RRC states and ARQ and HARQ transmission protocols that ensure reliable data delivery, A-loT devices have limited power available resulting in reduced time periods of communication capability and A-loT devices are configured with new specifically designed new operation states. Thus, integration of A-loT devices into 5G and future technologies poses a demanding problem that is addressed in the present disclosure.

### Embodiments

The present disclosure addresses the integration of A-loT devices into communication networks, particularly, 5G and future technologies.

It is noted that the present disclosure is not limited to A-loT devices. It may be also applicable to any other kind of loT devices or to other devices with possibly substantial power limitations. For example, the terms loT device and A-loT device are used interchangeably in this disclosure.

In the following, a node communicating with an A-loT device and, for example, receiving data from the A-loT device, may be also referred to as a reader.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) or loT device or A-loT device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" or "node" or "reader" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station or an intermediate node is typically standardized and may be defined by different layers, such as PHY, MAC, RRC etc. (see above background discussion).

The present disclosure relates to an A-loT device, a base station, and an intermediate node connected to a base station methods of communication between the A-loT device and the base station and the A-loT device and the intermediate node.

### Topologies

Particularly, two different topologies are exemplarily considered in this disclosure. In a first topology 100 as illustrated in Fig. 2, an A-loT device 110 directly and bidirectionally communicates with a base station 120 over a wireless channel 150. In general, the A-loT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station 120 may still include communication via one or more distributed units, DU, of the base stations 120. A base station 120 may operate one or more cells.

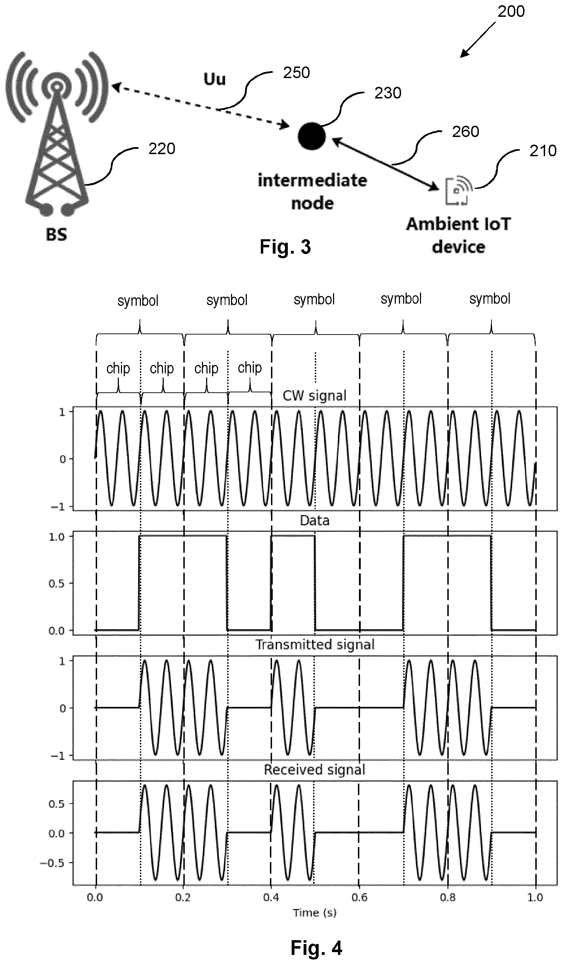

In a second topology 200 as illustrated in Fig. 3, an A-loT device 210 bidirectionally communicates with an intermediate node 230 that is located between the A-loT device 210 and the base station 220. The intermediate node 230 could be a UE, IAB, relay, or NCR. The intermediate node 230 is connected to both the base station 220 and the A-loT device 210 and transfers the user data and/ signaling between the A-loT device 210 and the base station 220. Traffics are A-loT device terminated or A-loT device originated. The base station 220 may communicate with the intermediate node 230 via a first interface 250. In Fig. 3, this is exemplified as the Uu interface (UE - gNB interface in NR). The intermediate node 230 may communicate with the A-loT device 210 via a second interface 260. The present disclosure is not limited to any specific interface definition. In general, interfaces 250 and 260 may be both wireless interfaces.

### Data transmission and reception

In both the first topology 100 and the second topology 200, data is transmitted from a node (base station 120 in Fig. 2 or intermediate node 230 in Fig. 3) to the A-loT device, or vice versa, by modulating data on a "CW signal" according to an ON-OFF keying (OOK) line coding scheme, as exemplary illustrated in the schematic transmission diagram shown in **Fig. 4****.** This means that digital data (see second row from the top in Fig. 4), is represented by the presence or absence of the carrier wave. In the illustrated example, for transmitting a data bit 1 the data transmitting device first transmits the carrier wave signal for one chip duration (i.e. the carrier wave signal is present for one chip duration) and subsequently does not transmit a signal for one chip duration (i.e. the carrier wave signal is absent for one chip duration). For transmitting a data bit 0, the data transmitting device does not transmit a signal for one chip duration (i.e. the carrier wave signal is absent for one chip duration) and subsequently transmits the carrier wave signal for one chip duration (i.e. the carrier wave signal is present for one chip duration) (see third row in Fig. 4). The data receiving device detects the transmitted data by using an envelope detection technique. In particular, in the illustrated example, the data receiving device interprets the reception of the carrier wave for the duration of one chip and the subsequent absence of the carrier wave signal for the duration of one chip as a data bit 1, while the data receiving device interprets the absence of the carrier wave for the duration of one chip and the subsequent absence of the carrier wave signal for the duration of one chip as a data bit 1 (see fourth row from the top in Fig. 4).

Hereby, a "chip" (indicated by dashed and dotted lines in Fig. 4) signifies the basic building block for transmitting the data. In order to enhance the robustness of the data transmission, data bits are usually transmitted in form of "symbols" (indicated by dashed lines in Fig. 4), which include more than one chip. In the illustrated example, a symbol comprises two chips, and a data bit 0 is transmitted by transmitting the chip sequence or "physical bit sequence" "01" and a data bit of 1 is transmitted by transmitting the chip sequence or "physical bit sequence" "10". In other words, while the duration of a chip corresponds to a basic time interval for modulating a physical bit on the carrier wave signal (i.e. presence or absence of the carrier wave), the duration of a symbol corresponds to a basic unit for modulating a data bit on the carrier wave signal and the duration of a symbol is depending on the number of chips used for transmitting one data bit. Accordingly, the duration of a symbol is equal (when a symbol includes exactly one chip) or larger (when a symbol includes more than one chip) than the duration of the chip.

It should be noted that, while in the following aspects of the disclosure, an OOK modulation scheme is used as exemplary modulation scheme, that alternatively also other amplitude modulation schemes may be used, which represent digital data by transmitting a carrier wave at different power levels for a defined time interval.

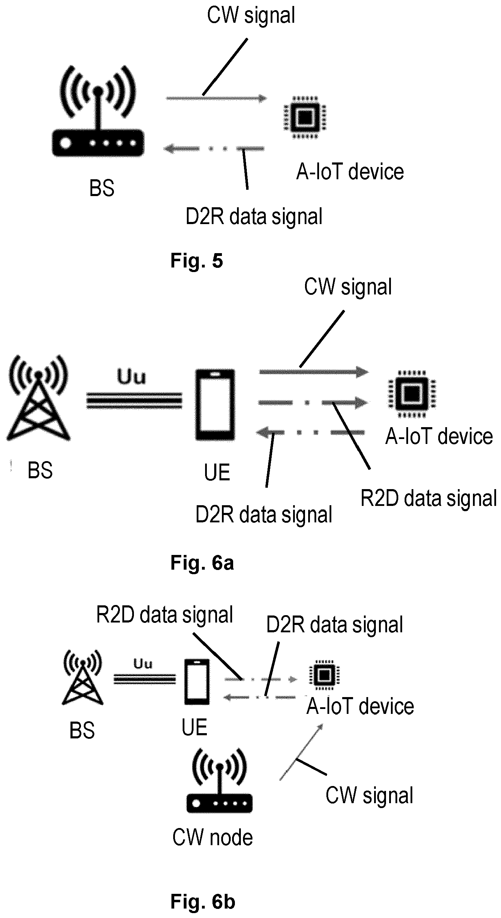

For transmitting data from a reader (or node) to an loT device, which is also signified as downlink (DL) data transmission, R2D (Reader to Device) data transmission or device terminated (DT) data transmission, the reader generates the carrier wave signal and modulates the carrier wave signal to transmit the data. On the other hand, in order to reduce the power consumption and complexity of an loT device, the loT device may not comprise circuitry for generating the carrier wave signal. Instead the loT device receives a carrier wave signal from a carrier wave node and generates a backscattering signal (i.e. backscatters the received carrier wave signal). Hence, for transmitting data from an loT device to a reader (or node), which is also signified as uplink (UL) data transmission, D2R (Device to Reader) data transmission or Device originated (DO) data transmission, the loT device generates the backscattering signal and modulates the carrier wave signal to transmit the data. Fig. 5 illustrates an exemplary implementation of D2R data transmission in the first topology, where the base station functions as the reader and generates the CW signal, and transmits the CW signal to the loT device. The loT device backscatters and modulates the CW signal to generate the backscattered signal as the D2R data signal. **Figs. 6a and 6b** illustrate exemplary implementations of D2R and R2D data transmissions in the second topology, where a UE as an intermediate node functions as a reader. In both exemplary implementation, to generate the R2D data signal, the UE generates the carrier wave signal, which is then modulated by the UE to generate the R2D data signal. In the topology of Fig. 6a, the UE also generates the CW signal and transmits the CW signal to the loT device. The loT device backscatters and modulates the CW signal to generate the backscattered signal as the D2R data signal. Alternatively, in the topology of Fig. 6b, the CW signal is generated by a CW node, which is arranged separately from the UE. The CW node transmits the CW signal to the loT device. The loT device backscatters the CW signal to generate the backscattered signal as the D2R data signal, which is transmitted to the UE.

### Further improvements

To simplify the circuit design, especially of a transceiver, conventional channel estimation techniques and conventional channel hopping techniques may not be feasible for A-loT devices. In addition, when transmitting and receiving signals frequency selective fading could severally affect the communication performance between the A-loT device and a node due to low transmission power, particularly, when only backscattering operation is feasible. Further, an A-loT device may only be capable of harvesting energy of a CW signal with a specific frequency, so that a base station or intermediate node, which communicates with a plurality of A-loT devices may need to provide many CW signals at different frequencies. However, simultaneous transmission of CW signals at different frequencies may in return affect the signal level of each individual CW signal, so that also in such a case energy harvesting for at least some of the plurality of A-loT devices may be complicated.

In view of the mentioned limitations, the inventors thus identified several solutions for facilitating an improved signal transmission between a node, which may be for example a base station, an intermediate node or a CW node, and an loT device, which are presented in the following.

### First Embodiment

In this embodiment, it is provided a node, comprising a transceiver, and circuitry which, in operation, generates (is configured to generate) a carrier wave signal, to be transmitted to an Internet of Thing, loT, device. The circuitry, in operation, changes (is configured to change) a value of a characteristic (for example, a frequency, an amplitude or a phase) of the carrier wave signal at least between a first characteristic value and a second characteristic value during a modulation time interval (for example, a symbol or a chip), which defines a unit time interval for modulating the carrier wave signal to transmit data.

The generated carrier wave signal is transmitted by the transceiver of the node. Thus, the node transmits the carrier wave signal, which is modulated based on data (either by the node itself in D2R data transmission or by the loT device in R2D data transmission), having in each modulation time interval a diverse characteristic. This facilitates to enhance a diversity of a characteristic of a data transmission signal, which is generated by modulating the carrier wave signal.

For example, the node may be either one of a base station (e.g. in the exemplary implementation shown in Fig. 5), a UE or other intermediate node (e.g. in the exemplary implementation shown in Fig. 6a), or a CW (carrier wave) node (e.g. in the exemplary implementation shown in Fig. 6b).

The characteristic of the carrier wave signal, which is changed by the node during the modulation time interval may be a frequency, so that a frequency of the carrier wave signal is changed between a first frequency value (like a baseband frequency of the carrier wave signal) and a second frequency value, an amplitude, so that an amplitude of the carrier wave signal is changed between a first amplitude value and a second amplitude value, or a phase of the carrier wave signal, so that a phase of the carrier wave signal is changed between a first phase value and a second phase value. Further, a value of a characteristic may be changed between more than two characteristic values, for example between three or more characteristic values.

The modulation time interval may be, for example, a duration of a symbol or a duration of a chip of data, which are modulated to the carrier wave signal. But, the modulation time interval can be also another time interval, which is used for modulating the carrier wave signal. For example, the modulation time interval may be determined by the node and indicated to the loT device (e.g. in the first topology) or may be pre-obtained by the node (e.g. in the second topology), for example by semi-static signaling or by dynamic signaling. The modulation time interval may be a time interval, which is fixed at least during a transmission round (or transmission interval) of D2R data or R2D data.

There is also provided a corresponding exemplary method, which comprises the following steps performed by a node: Generating a carrier wave signal to be transmitted to an Internet of Thing, loT, device, and changing a value of a characteristic of the carrier wave signal at least between a first characteristic value and a second characteristic value during a modulation time interval, which defines a unit time interval for modulating the carrier wave signal to transmit data. Optionally, the method may also include a step of transmitting the carrier wave signal.

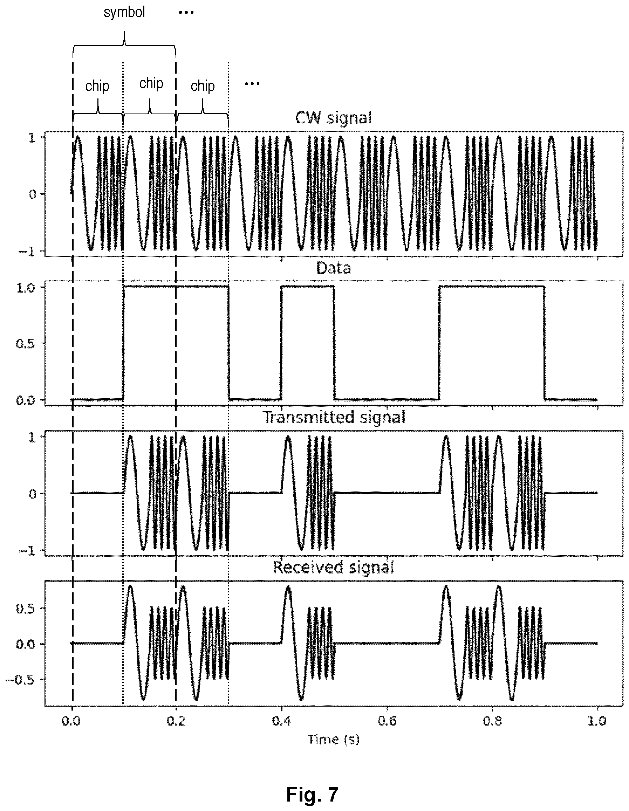

**Fig. 7** illustrates an exemplary transmission scheme for an exemplary transmission and modulation of the CW signal. As schematically indicated by dashed and dotted lines, it is again assumed that each symbol includes two chips (in analogy to Fig. 4). In the illustrated example, the node transmits the CW signal (top row) with a lower frequency (first frequency) and then changes the frequency to a higher frequency in each chip (as an exemplary modulation time interval). Accordingly, the CW signal is transmitted in every chip at two different frequencies (as an example of the characteristic). To transmit data, a transmitting device, which can be either the node for transmitting R2D data or the loT device for transmitting D2R data, modulates the CW signal with an OOK modulation scheme based on the data (see second row in Fig. 7). Accordingly, the transmitting device transmits (or backscatters) the CW signal during a duration of each chip, which represents a binary one, so that the transmitted signal (see third row in Fig. 7) for each binary bit has a part which is transmitted at the lower frequency (first frequency), and has a part, which is transmitted at the higher frequency (second frequency). Accordingly, enhancing the frequency diversity of the transmitted signal can be facilitated, and even if the signal attenuation is large for one of the two frequencies, like for the high-frequency part of the transmitted signal in this example (see received signal in the fourth row), the receiving device can detect the information transmitted in the low-frequency part of the transmitted signal.

In an exemplary implementation of the first embodiment, the circuitry, in operation, determines the first characteristic value and the second characteristic value based on a reception capability of the loT device. For example, the node may transmit the CW signal with two (or more) frequencies (or amplitudes or phases) during each chip or symbol duration to a same loT device, so that each chip or symbol of a (D2R and/or R2D) data signal is transmitted between a reader (which may be the same or a different node as illustrated in Figs. 5, 6a and 6b) and the loT device is transmitted with two (or more) frequencies. This facilitates to enhance the robustness of the data transmission signal, even if the utilized frequencies of the data transmission signal experience different channel conditions, like different attenuations (see e.g. Fig. 7).

In another exemplary implementation of the first embodiment, the circuitry, in operation, determines the first characteristic value based on a reception capability of a first loT device and the second characteristic value based on a reception capability of a second loT device. Especially, the node may transmit the CW signal to two (a first and a second) or more loT devices, for example to allow multiple loT devices to harvest energy from the CW signal.

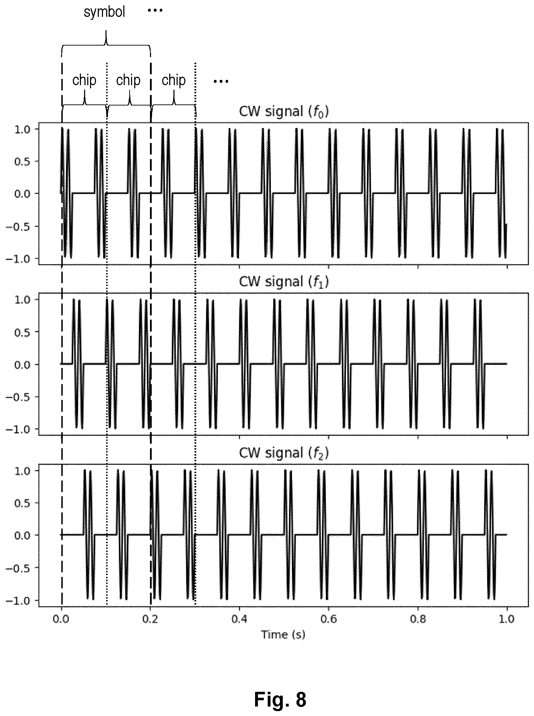

**Fig. 8** shows an exemplary transmission diagram of the transmission of a CW signal, which is transmitted at three different frequencies (f0, f1 and f2) within the duration of a chip or symbol, wherein the CW signal is split according to spectral frequencies. In this example, the node alternately switches between the three frequencies f0, f1, and f2 when transmitting the CW signal, so that the CW signal is alternately transmitted with frequency f0, with frequency f1 and with frequency f2. This facilitates that several loT devices, which may have different reception bandwidths, can harvest energy from a CW signal transmitted by a single node. Advantageously, the node transmits the CW signal at a single frequency at a same time, so as to enhance the signal strength of the spectral parts of the CW signal. This facilitates to meet requirements for a minimum signal strength of the CW signal received by several loT devices. Alternatively, the node may transmit the CW signal at more than one frequency at a same time.

If the loT device is capable of receiving spectral parts of the CW signal at more than one frequency, the loT device may use the clock pulse indicated by the reception of different spectral parts of the carrier wave signal as a synchronization signal, for adjusting or replacing its internal clock.

In another exemplary implementation of the first embodiment, the transceiver, in operation, transmits to or receives from a first loT device a first data signal, which is generated by modulating a first part of the carrier wave, which is transmitted with the first characteristic value, based on first data; and transmits to or receives from a second loT device a second data signal, which is generated by modulating a second part of the carrier wave, which is transmitted with the second characteristic value, based on second data.

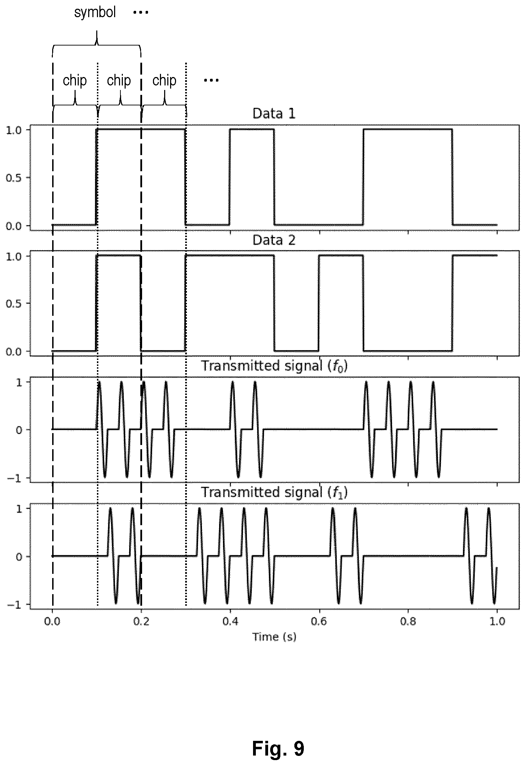

**Fig. 9** shows an exemplary transmission diagram of the transmission of two different data signals (third and fourth row), which are generated by modulating different spectral parts of the CW signal with different data (represented in the first and second row). As schematically indicated by dashed and dotted lines, it is again assumed that each symbol includes two chips (in analogy to Fig. 4). For example, the node may communicate with a plurality of loT devices in different frequency bandwidths, determined depending on the reception capabilities of the loT devices. By changing the frequency of the CW signal during the duration of the modulation time interval between the different frequency bandwidths of the different loT devices, the node can simultaneously transmit data to the different loT devices over the different frequency bandwidths. Moreover, the same modulation rate (i.e. chip rate or symbol rate) can be maintained for the plurality of devices.

Similar, the node may receive data signals, which are generated by modulating (and backscattering) different spectral parts of the CW signal, from different loT devices simultaneously. The node can identify data transmitted by a particular loT device based on the spectral frequency of the backscattered signal, which is received from the loT device. For example, the node may receive a first data signal (e.g. third row in Fig. 9), which is generated by a first loT device by backscattering spectral parts of the CW signal, which are transmitted at frequency f0 (a first frequency) and may in addition receive a second data signal (e.g. fourth row in Fig. 9), which is generated by a second loT device by backscattering spectral parts of the CW signal, which are transmitted at frequency f1 (a second frequency). In this case, the node interprets the data received with the first data signal to be first data (e.g. first row in Fig. 9) received from the first loT device and the data received with the second data signal to be second data (e.g. second row in Fig. 9) received from the second loT device.

In another exemplary implementation of the first embodiment, the circuitry, in operation changes the characteristic of the carrier wave signal according to a changing pattern. The changing pattern defines at least one of the first characteristic value and the second characteristic value, a first duration for applying the first characteristic value and a second duration for applying the second characteristic value, a difference between the first characteristic value and the second characteristic value, an offset to be applied after a change between the first characteristic value and the second characteristic value, or a duration of the modulation time interval.

Hereby, the changing pattern may define parameters for changing the value of the characteristic of the CW signal between two or more values.

For example, the first characteristic value may be a frequency, amplitude or phase to be applied before the change of the characteristic of the CW signal, and the second characteristic value may be a frequency, amplitude or phase to be applied after the change of the characteristic of the CW signal. The difference between the first characteristic value and the second characteristic value may indicate an amount of the changed value, for example a frequency shift, and an amplitude shift or a phase shift that is applied when changing the characteristic of the carrier wave signal. The offset may indicate an amount of an offset, for example a frequency offset, an amplitude offset or a phase offset that is applied each time when changing the characteristic of the carrier wave signal.

In the first topology (see Fig. 2) the base station, which functions as the reader (and node), may determine the changing pattern in accordance with the reception and/or transmission capabilities of the one or more loT devices, with which the base station communicates. In the second topology (see Fig. 3), the base station may determine the changing pattern in accordance with the reception and/or transmission capabilities of the one or more loT devices, with which the intermediate node communicates, and/or in accordance with the reception and/or transmission capabilities of the intermediate node. The intermediate node, which generates (and transmits) the CW signal (e.g. the UE in Fig. 6a or the CW node in Fig. 6b) may receive a changing pattern indication, which comprises information related to the determined changing pattern. The changing pattern indication may be signaled from the base station to the intermediate node for example by semi-static signaling or by dynamic signaling. Alternatively, the changing pattern may be pre-configured, for example hard-coded in a firmware of the intermediate node.

It is noted that in the first embodiment as well as in the embodiments described in the following, individual implementations of the embodiment and of other embodiments can be combined with each other where considered appropriate.

### Second Embodiment

In this embodiment, the node may change a baseband frequency of the carrier wave signal for each transmission or reception period, in addition to changing the value of the characteristic of the carrier wave signal within the bandwidth of the baseband during the modulation time interval, which may be performed according to the first embodiment one of the exemplary implementation of the first embodiment (or a combination thereof).

According to the second embodiment, the circuitry, in operation, after determining completion of the reception of data or after determining completion of the transmission of data, shifts a baseband frequency of the carrier wave signal to a different bandwidth. This facilitates, to further enhance the frequency diversity of the transmitted signals (carrier wave signal and R2D/D2R data signals). For example, with the present implementations, R2D and D2R data transmissions between the node and the loT device may be scheduled in different frequency bands.

The node, for example, determines completion of the transmission of data in according with the end of a scheduling interval for R2D data (e.g. after transmission of a predetermined number of symbols or similar), and, for example, determines completion of the reception of data in according with the end of a scheduling interval for D2R data (e.g. after transmission of a predetermined number of symbols or similar).

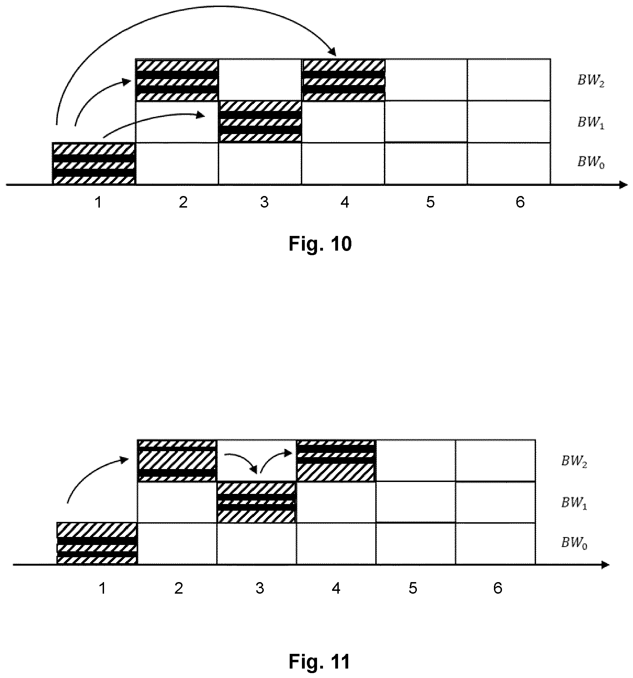

For example, the node may shift the baseband frequency of the carrier wave signal according to a frequency hopping pattern. **Figs. 10 and 11** show schematic transmission diagrams for illustrating the shift of the bandwidth of the carrier wave signal after each transmission or reception interval. Here, the carrier wave is transmitted in a first frequency baseband having bandwidth BW0 in a first transmission/reception interval (#1), in a third frequency baseband having bandwidth BW2 in a second transmission/reception interval (#2), in a second frequency baseband having bandwidth BW1 in a third transmission/reception interval (#3), and again in the third frequency baseband having bandwidth BW2 in the fourth transmission/reception interval (#4).

In the first topology (see Fig.2) the base station, which functions as the reader (and node), may determine the hopping pattern in accordance with the reception and/or transmission capabilities of the one or more loT devices, with which the base station communicates.

In the second topology (see Fig. 3), the base station may determine the hopping pattern in accordance with the reception and/or transmission capabilities of the one or more loT devices, with which the intermediate node communicates, and in accordance with the reception and/or transmission capabilities of the intermediate node. The intermediate node, which generates (and transmits) the CW signal (e.g. the UE in Fig. 6a or the CW node in Fig. 6b) may receive a hopping pattern indication, which comprises information related to the shift of the baseband frequency of the carrier wave signal. The circuitry, of the intermediate node, determines the shift of the baseband frequency according to the information comprised in the hopping pattern indication. The hopping pattern indication may be signaled from the base station to the intermediate node for example by semi-static signaling or by dynamic signaling. Alternatively, the changing pattern may be pre-configured, for example hard-coded in a firmware of the intermediate node.

The hopping pattern indication may be signaled as control information in a first transmission/reception interval, as illustrated in Fig. 10, and indicate shifts of the baseband frequency for more than one transmission/reception interval. Alternatively, the hopping pattern indication may be signaled as control information in each transmission/reception interval, as illustrated in Fig. 11, and may indicate a shift of the baseband frequency from a present transmission/reception interval to a next transmission/reception interval. In another alternative implementation, which facilitates reducing the overhead of control signaling, the node (as an intermediate node) may determine the baseband frequency of a transmission/reception interval by using a timing index, like a system frame number (SFN) index, a subframe/slot index, a transmission index or similar.

According to an optional implementation of the second embodiment, after shifting the baseband frequency of the carrier wave signal, a difference between the first characteristic value and the second characteristic value remains constant. In other words, the circuitry of the node may use the same changing pattern for changing the characteristic of the carrier wave within each transmission/reception interval. For example, as schematically indicated in Fig. 10, a difference between a first frequency and a second frequency, with which the carrier wave signal is transmitted in each modulation time interval, may be equal in all transmission/reception intervals.

According to another optional implementation of the second embodiment, after shifting the baseband frequency of the carrier wave signal, a difference between the first characteristic value and the second characteristic value is changed. In other words, the circuitry of the node may use different changing patterns for changing the characteristic of the carrier wave within different transmission/reception intervals. For example, as schematically indicated in Fig. 11, a difference between a first frequency and a second frequency, with which the carrier wave signal is transmitted in each modulation time interval, may vary between the different transmission/reception intervals. The information relating to the changing pattern for each interval may be signaled to the node in analogy to the signaling related to the hopping pattern described above. Alternatively, in order to reduce the overhead of control signaling, the node (as an intermediate node) may determine the changing pattern to be used in a transmission/reception interval by using a timing index, like a system frame number (SFN) index, a subframe/slot index, a transmission index or similar.

### Third Embodiment

In the third embodiment, which may be implemented alone or which can be combined with any implementation of the first embodiment and of the second embodiment, different to the first embodiment and to the second embodiment, the loT device changes a value of a characteristic of the backscattering signal, when backscattering the carrier wave signal to transmit data to a reader. In this manner, the third embodiment provides advantages corresponding to the ones described with reference to the first embodiment.

There is provided an loT device, which comprises a transceiver which, in operation, receives ((is configured to receive) a carrier wave signal; and circuitry, which in operation, generates (is configured to generate) a backscattering signal to be transmitted by backscattering the carrier wave signal. The circuitry, in operation, changes a value of a characteristic of the backscattering signal at least between a first characteristic value and a second characteristic value within a modulation time interval, which defines a unit time interval for modulating the backscattering signal to transmit data.

The generated backscattering signal is transmitted by the transceiver of the loT device. Thus, the loT device transmits the backscattering signal, which is modulated based on data having in each modulation time interval a diverse characteristic, so that enhancing a diversity of a characteristic of the data signal, which is transmitted by the loT device is facilitated.

The characteristic of the backscattering signal, which is changed by the loT device during the modulation time interval may be a frequency, so that a frequency of the backscattering signal is changed between a first frequency value (like a baseband frequency of the backscattering signal) and a second frequency value, an amplitude, so that an amplitude of the backscattering signal is changed between a first amplitude value and a second amplitude value or a phase of the backscattering signal, so that a phase of the backscattering signal is changed between a first phase value and a second phase value. Further, a value of a characteristic may be changed between more than two characteristic values, for example between three or more characteristic values.

The modulation time interval may, for example, be a duration of a symbol or a duration of a chip of data, which are modulated to the backscattering signal. But the modulation time interval can be also another time interval, used for modulating the backscattering signal based on data. For example, the modulation time interval may be indicated to the loT device, for example by semi-static signaling or by dynamic signaling, or may be pre-configured (e.g. hard-coded in a firmware of the loT device). The modulation time interval may be a time interval, which is fixed at least during a transmission round of D2R data.

There is also provided a corresponding exemplary method, which comprises the following steps performed by a node: Receiving a carrier wave signal, and generating a backscattering signal to be transmitted by backscattering the carrier wave signal, wherein a value of a characteristic of the backscattering signal is changed at least between a first characteristic value and a second characteristic value within a modulation time interval, which defines a unit time interval for modulating the backscattering signal to transmit data.

According to an exemplary implementation of the third embodiment, the transceiver, in operation, transmits a first data signal, which is generated by modulating a first part of the backscattering signal, which is transmitted with the first characteristic value, based on first data, and transmits a second data signal, which is generated by modulating a second part of the backscattering signal, which is transmitted with the second characteristic value, based on second data.

Optionally, the first data, which is transmitted by modulating the first part of the backscattering signal and the second data, which is transmitted by modulating the second part of the data signal, are same.

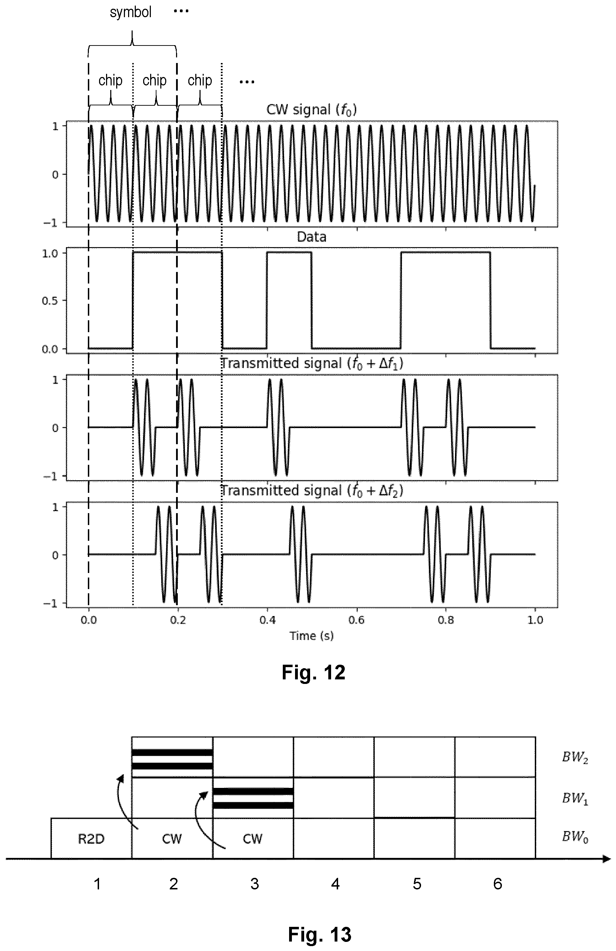

**Fig. 12** shows an exemplary transmission scheme of the transmission of two different backscattering signals (third and fourth row), which are generated by modulating different spectral parts of the received CW signal (signal) with same data (represented in the first and second row). As schematically indicated by dashed and dotted lines, it is again assumed that each symbol includes two chips (in analogy to Fig. 4). In the illustrated example, the loT device receives a CW signal (top row) having a baseband frequency of f0. The loT device generates a first backscattering signal (third row in Fig. 12) by shifting the frequency of the CW signal with a first frequency offset Δf1 and modulates the first backscattering signal according to an OOK modulation scheme based on the data (second row in Fig. 12). In addition, the loT device generates a second backscattering signal (fourth row in Fig. 12) by shifting the frequency of the CW signal with a second frequency offset Δf2 and modulates the first backscattering signal according to an OOK modulation scheme based on the data (see second row in Fig. 12).

In this manner, the transmitting device transmits the information of each chip, which represents a binary one (higher power level), with two frequency components in the backscattered signal. Accordingly, each physical bit of the data is transmitted in a spectral part of the backscattered wave, which is transmitted at a first frequency (e.g. f0+ Δf1), and in a spectral part, which is transmitted at a second frequency (e.g. f0+ Δf2). In this manner, the loT device facilitates enhancing the frequency diversity of the transmitted signal, and even if the signal attenuation is large for one of the first frequency and the second frequency, the reader can detect the information transmitted in the other spectral part of the transmitted signal.

According to another exemplary implementation of the third embodiment, the circuitry, in operation, changes the characteristic of the backscattering signal according to a changing pattern. The changing pattern includes at least one of the first characteristic value and the second characteristic value, a first duration for applying the first characteristic value and a second duration for applying the second characteristic value, a difference between the first characteristic value and the second characteristic value, an offset to be applied after a change between the first characteristic value and the second characteristic value, and a duration of the modulation time interval.

Hereby, the changing pattern may define parameters for changing the value of the characteristic of the backscattering signal between two or more values.

For example, the first characteristic value may be a frequency, amplitude or phase to be applied before the change of the characteristic of the backscattering signal, and the second characteristic value may be a frequency, amplitude or phase to be applied after the change of the characteristic of the backscattering signal. The difference between the first characteristic value and the second characteristic value may indicate an amount of the changed value, for example a frequency shift, an amplitude shift or a phase shift that is applied when changing the characteristic of the backscattering signal. The offset may indicate an amount of an offset, for example a frequency offset, an amplitude offset or a phase offset that is applied each time when changing the characteristic of the backscattering wave signal.

According to another exemplary implementation of the third embodiment, the changing pattern is pre-configured or the transceiver, in operation, receives a changing pattern indication comprising information related to the changing pattern.

The loT device may receive the changing pattern indication from a base station (in the first topology) or from an intermediate node (in the second topology). The base station may determine the changing pattern, for example, in accordance with the reception and/or transmission capabilities of the loT devices. The loT device may receive the changing pattern indication for example by semi-static signaling or by dynamic signaling (as a part of R2D control information). Alternatively, the changing pattern may be pre-configured, for example hard-coded in a firmware of the loT device or the loT device may (randomly) apply a selection of available characteristic values (for example a selection of available frequency shift, amplitude shifts or phase shifts) and (randomly) generate the changing pattern.

According to another exemplary implementation of the third embodiment, the changing pattern is determined according to an identifier associated with the loT device. The identifier associated with the loT device may be a device ID (e.g. a unique PHY ID), that may be predefined (e.g. hard-coded), pre-configured, configured, assigned (e.g. temporarily assigned by the network to the loT device), or randomly selected for the loT device. Providing different changing pattern for different loT devices, may additionally facilitate to mitigate the interference between D2R data transmissions (UL data transmissions) from the different loT devices to a same reader.

### Fourth embodiment

In this embodiment, the loT device may change a baseband frequency of the backscattering signal for each transmission period, in addition to changing the value of the characteristic of the backscattering signal within the bandwidth of the baseband during the modulation time interval, which may be performed according to the third embodiment one of the exemplary implementation of the third embodiment (or a combination thereof).

According to the fourth embodiment, the circuitry, in operation, after determining completion of the reception of data or after determining completion of the transmission of data, shifts a baseband frequency of the backscattering signal to a different bandwidth. This facilitates, to further enhance the frequency diversity of the transmitted backscattering signals.

The loT device, for example, determines completion of the transmission of data in according with the end of a scheduling interval for D2R data (e.g. after transmission of a predetermined number of symbols or similar), and, for example, determines completion of the reception of data in according with the end of a scheduling interval for R2D data (e.g. after transmission of a predetermined number of symbols or similar).

For example, the loT device may shift the baseband frequency of the backscattering signal according to a frequency hopping pattern. **Fig. 13** shows a schematic transmission diagram for illustrating the shift of the bandwidth of the backscattering signal after each transmission or reception interval. Here, the carrier wave signal is received in a first frequency baseband having bandwidth BW0 in the second (#2) and third (#3) transmission interval. The loT device generates the backscattering signal by applying a frequency shift to the carrier wave signal, to transmit the backscattering signal in a third frequency baseband having bandwidth BW2 in a second transmission interval (#2), and to transmit in a second frequency baseband having bandwidth BW1 in a third transmission interval (#3).

According to an optional implementation of the fourth embodiment, the transceiver, in operation, receives a hopping pattern indication comprising information related to the shift of the baseband frequency of the backscattering signal, and the circuitry, in operation, determines the shift of the baseband frequency of the backscattering signal according to information comprised in the hopping pattern indication.

The loT device may receive the hopping pattern indication from a base station (in the first topology) or from an intermediate node (in the second topology). The base station may determine the shift of the baseband frequency, for example, in accordance with the transmission capabilities of the loT device. The loT device may receive the hopping pattern indication for example by semi-static signaling or by dynamic signaling, for example as a part of the R2D control information. Alternatively, the hopping pattern may be pre-configured, for example hard-coded in a firmware of the loT device. In another alternative implementation, the loT device may (randomly) select one or more among a plurality of available shifts of the baseband frequency and (randomly) generate the hopping pattern. The loT device may indicate information on the (randomly) generated hopping pattern or on the shift of the baseband frequency applied in a particular transmission interval as a part of the D2R control information.

According to an optional implementation of the fourth embodiment, after shifting the baseband frequency of the backscattering signal, a difference between the first characteristic value and the second characteristic value remains constant. In other words, the circuitry of the loT device may use the same changing pattern for changing the characteristic of the backscattering wave within each transmission interval. For example, as schematically indicated in Fig. 13, a difference between a first frequency and a second frequency, with which the backscattering signal is transmitted in each modulation time interval, may be equal in all transmission intervals.

According to another optional implementation of the fourth embodiment, after shifting the baseband frequency of the backscattering signal, a difference between the first characteristic value and the second characteristic value is changed. In other words, the circuitry of the loT device may use a different changing pattern for changing the characteristic of the backscattering signal within different transmission intervals. The information relating to the changing pattern for each interval may be signaled to the loT or determined by the loT device in analogy to the signaling related to the hopping pattern described above. In an alternative implementation, which facilitates to reduce the overhead of control signaling, the loT device may determine the changing pattern to be used in a transmission interval by using a timing index, like a system frame number (SFN) index, a subframe/slot index, a transmission index or similar.

### Further implementations

As mentioned above, some loT devices have a limited energy capacity. The energy could be obtained from the environment (vibration, light, heat) or a carrier wave, e.g., provided by the gNB/intermediate node. To simplify circuit design, legacy channel estimation techniques and conventional channel hopping techniques may not be feasible for the loT devices. In addition, frequency selective fading could severally affect the communication performance between the loT device and a node due to low transmission power, particularly, when only backscattering operation is feasible. Further, an A-loT device may only be capable of harvesting energy of a carrier wave signal with a specific frequency, so that a base station or intermediate node, which communicates with a plurality of A-loT devices may need to provide many carrier wave signals at different frequencies.

To facilitate the communication considering the mentioned limitations, the node changes a value of a characteristic of a carrier wave signal at least between a first characteristic value and a second characteristic value during a modulation time interval, which defines a unit time interval for modulating the carrier wave signal to transmit data, and/or the loT device changes a value of a characteristic of the backscattering signal during the modulation time interval, when backscattering the carrier wave signal to transmit data to a reader.

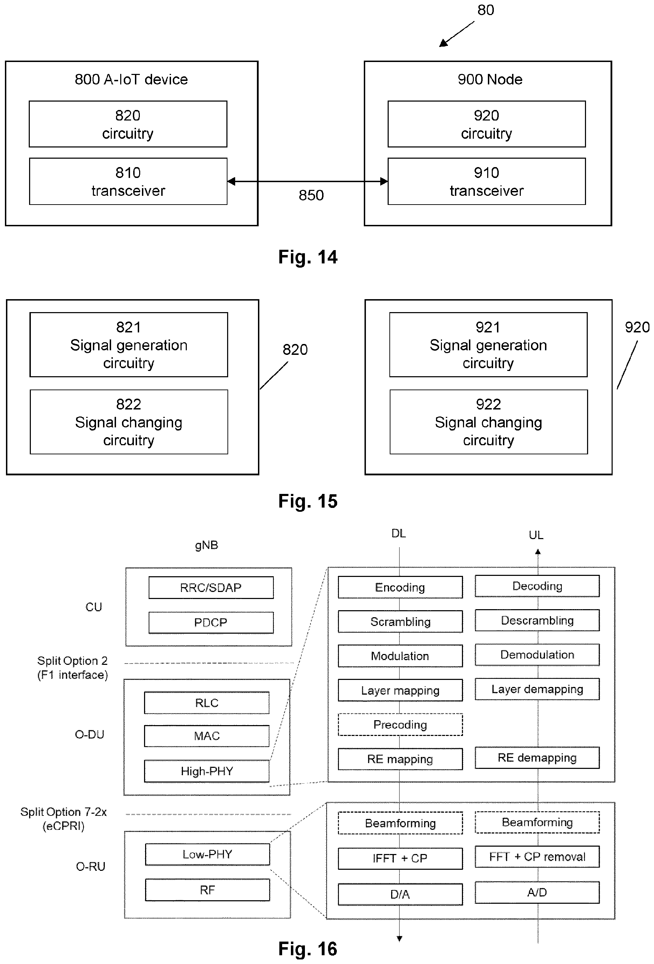

**Fig. 14** illustrates a general, simplified and exemplary block diagram of an loT device 800 and a node (base station, intermediate node connected to a base station or CW node) 900 forming a communication system 80. In the following, it is exemplarily assumed that node 900 is a base station functioning as a scheduling device like an eNB or gNB (network node). The loT device 800 may be a wearable, smart home device, automotive device, sensor, smart key, or healthcare device, for example.

The loT device 800 and the base station 900 (eNB/gNB) are communicating with each other over a (wireless) physical channel 850, respectively, using their transceivers 810 (IoT device side) and 910 (base station side). The base station 900 and the loT device 800 are capable of transmitting as well as receiving radio signals via the channel 850. Together, the base station 900 and the loT device 800 form a communication system 80, for example, a 5G or future communication system. The communication system 80 may further include other entities such as further base stations, intermediate nodes and/or loT devices. Any of the above-described embodiments may be implemented in the A-loT device 800, the base station 900 and/or communication system 80 where appropriate.

The loT device 800 comprises a transceiver 810 and a (processing) circuitry 820, and the base station 900 comprises a transceiver 910 and a (processing) circuitry 920. The transceiver 810, 910 in turn comprise and/or function as a receiver and/or a transmitter. In this disclosure, in other words, the term "transceiver" is used for hardware and/or software components that allow the loT device 800, and the base station 900 to transmit and/or receive radio signals over the wireless channel 850, for example, a physical channel. Moreover, the term "circuitry" includes processing circuitry formed by one or more processors or processing units, etc.

The circuitry 820 may perform any determinations and operations described above with respect to the embodiments. The transceiver 810 may transmit and/or receive signals as described with respect to the embodiments. The circuitry 820 may control the transceiver 810 to perform the transmissions and/or receptions.

The circuitry 920 may perform any determinations and operations described above with respect to the embodiments. The transceiver 910 may transmit and/or receive signals as described with respect to the embodiments. The circuitry 920 may control the transceiver 910 to perform the transmissions and/or receptions.

In some embodiments, the transceiver 810 of the loT device 800 receives a carrier wave signal. The circuitry 820 of the loT device 800 generates a backscattering signal to be transmitted by backscattering the carrier wave signal, wherein the circuitry 820 of the loT device 800 changes a value of a characteristic of the backscattering signal at least between a first characteristic value and a second characteristic value within a modulation time interval, which defines a unit time interval for modulating the backscattering signal to transmit data.

In some embodiments, the circuitry 920 of the base station 900 generates a carrier wave signal to be transmitted to an loT device, wherein the circuitry 920 of the base station 900 changes a value of a characteristic of the carrier wave signal at least between a first characteristic value and a second characteristic value during a modulation time interval, which defines a unit time interval for modulating the carrier wave signal to transmit data. The transceiver 910 of the base station 900 transmits the carrier wave signal.

The circuitries may be configured by software to perform the functions as described in any of the above embodiments. As shown in **Fig. 15****,** the circuitry 820 of the loT device may further comprise a functional module referred to as signal generation circuitry 821 for performing the generation of the backscattering signal. A signal changing circuitry 822 is a functional module that controls the changing of the backscattering signal. Moreover, as shown in **Fig. 15****,** the circuitry 920 of the base station 900 or an intermediate node may further comprise a functional module referred to as signal generation circuitry 921 for performing the generation of the carrier wave signal. Signal changing circuitry 922 is a functional module that controls the changing of the characteristic of the carrier wave signal.

Moreover, it is noted that the loT device as described in any of the above embodiments and examples, may be integrated on an integrated circuit (IC). Moreover, the integration does not necessary include the entire transceiver. The transceiver is, in general, not necessarily a part of the loT device. The loT may be connected to an external antenna (module) connected to the loT device over a port on the loT device. Similar structure applies to the node.

Moreover, a computer program is provided including code instructions stored on a non-transitory medium, which when executed on one or more processor, causes the one or more processors to execute a method according to any of the above mentioned embodiments and examples.

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

**FIG. 16** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G System; Access and Mobility Management Services; Stage 3 (Release 18)".

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, it is provided a node, comprising a transceiver and circuitry which, in operation, generates a carrier wave signal to be transmitted to an Internet of Thing, loT, device, wherein the circuitry, in operation, changes a value of a characteristic of the carrier wave signal at least between a first characteristic value and a second characteristic value during a modulation time interval, which defines a unit time interval for modulating the carrier wave signal to transmit data.

According to an embodiment, the circuitry, in operation, determines the first characteristic value and the second characteristic value based on a reception capability of the loT device.

According to an embodiment, the circuitry, in operation, determines the first characteristic value based on a reception capability of a first loT device and the second characteristic value based on a reception capability of a second loT device.

According to an embodiment, the transceiver, in operation, transmits to or receives from a first loT device a first data signal, which is generated by modulating a first part of the carrier wave, which is transmitted with the first characteristic value, based on first data, and transmits to or receives from a second loT device a second data signal, which is generated by modulating a second part of the carrier wave, which is transmitted with the second characteristic value, based on second data.

According to an embodiment, the circuitry, in operation changes the characteristic of the carrier wave signal according to a changing pattern, wherein the changing pattern defines at least one of the first characteristic value and the second characteristic value, a first duration for applying the first characteristic value and a second duration for applying the second characteristic value, a difference between the first characteristic value and the second characteristic value, an offset to be applied after a change between the first characteristic value and the second characteristic value, and a duration of the modulation time interval.

According to an embodiment, the changing pattern is pre-configured or the transceiver, in operation, receives a changing pattern indication comprising information related to the changing pattern.

According to an embodiment, the circuitry, in operation, after determining completion of the reception of data or after determining completion of the transmission of data, shifts a baseband frequency of the carrier wave signal to a different bandwidth.

According to an optional implementation, after shifting the baseband frequency of the carrier wave signal, a difference between the first characteristic value and the second characteristic value remains constant. According to another optional implementation, after shifting the baseband frequency of the carrier wave signal, a difference between the first characteristic value and the second characteristic value is changed.

According to an embodiment, the transceiver, in operation, receives a hopping pattern indication comprising information related to the shift of the baseband frequency of the carrier wave signal and the circuitry, in operation, determines the shift of the baseband frequency according to the information comprised in the hopping pattern indication.

According to an embodiment, the characteristic is one of a frequency, an amplitude or a phase.

According to a second aspect, it is provided an Internet of Thing, loT, device, comprising a transceiver which, in operation, receives a carrier wave signal, and circuitry, which in operation, generates a backscattering signal to be transmitted by backscattering the carrier wave signal, wherein the circuitry, in operation, changes a value of a characteristic of the backscattering signal at least between a first characteristic value and a second characteristic value within a modulation time interval, which defines a unit time interval for modulating the backscattering signal to transmit data.

According to an embodiment, the transceiver, in operation, transmits a first data signal, which is generated by modulating a first part of the backscattering signal, which is transmitted with the first characteristic value, based on first data and transmits a second data signal, which is generated by modulating a second part of the backscattering signal, which is transmitted with the second characteristic value, based on second data. In an optional implementation the first data and the second data are same.

According to an embodiment, the circuitry, in operation, changes the characteristic of the backscattering signal according to a changing pattern, wherein the changing pattern includes at least one of the first characteristic value and the second characteristic value, a first duration for applying the first characteristic value and a second duration for applying the second characteristic value, a difference between the first characteristic value and the second characteristic value, an offset to be applied after a change between the first characteristic value and the second characteristic value, and a duration of the modulation time interval.

According to an embodiment, the changing pattern is pre-configured or the transceiver, in operation, receives a changing pattern indication comprising information related to the changing pattern.

According to an embodiment, the changing pattern is determined according to a device identifier, ID, of the loT device.

According to an embodiment, the circuitry, in operation, after determining completion of the reception of data or after determining completion of the transmission of data, shifts a baseband frequency of the backscattering signal to a different bandwidth.

In an optional implementation, after shifting the baseband frequency of the backscattering signal, a difference between the first characteristic value and the second characteristic value remains constant. In another optional implementation, after shifting the baseband frequency of the backscattering signal, a difference between the first characteristic value and the second characteristic value is changed. In another optional implementation, the transceiver, in operation, receives a hopping pattern indication comprising information related to the shift of the baseband frequency of the backscattering signal and the circuitry, in operation, determines the shift of the baseband frequency of the backscattering signal according to information comprised in the hopping pattern indication.

According to an embodiment, the characteristic is one of a frequency, an amplitude or a phase.

According to a third aspect it is provided a communication system comprising the node according to the first aspect or any embodiment/implementation thereof and/or an loT device according to the second aspect or any embodiment/implementation thereof.

According to a fourth aspect, it is provided a method for a node, wherein the method comprises generating a carrier wave signal to be transmitted to an Internet of Thing, loT, device, and changing a value of a characteristic of the carrier wave signal at least between a first characteristic value and a second characteristic value during a modulation time interval, which defines a unit time interval for modulating the carrier wave signal to transmit data.

According to an embodiment, the method further comprises determining the first characteristic value and the second characteristic value based on a reception capability of the loT device.

According to an embodiment, the method further comprises determining the first characteristic value based on a reception capability of a first loT device and the second characteristic value based on a reception capability of a second loT device.

According to an embodiment, the method further comprises transmitting to or receiving from a first loT device a first data signal, which is generated by modulating a first part of the carrier wave, which is transmitted with the first characteristic value, based on first data, and transmitting to or receiving from a second loT device a second data signal, which is generated by modulating a second part of the carrier wave, which is transmitted with the second characteristic value, based on second data.

According to an embodiment, the characteristic of the carrier wave signal is changed according to a changing pattern, wherein the changing pattern defines at least one of the first characteristic value and the second characteristic value, a first duration for applying the first characteristic value and a second duration for applying the second characteristic value, a difference between the first characteristic value and the second characteristic value, an offset to be applied after a change between the first characteristic value and the second characteristic value, and a duration of the modulation time interval.

According to an embodiment, the changing pattern is pre-configured or the method further comprises receiving a changing pattern indication comprising information related to the changing pattern.

According to an embodiment, the method further comprises, after determining completion of the reception of data or after determining completion of the transmission of data, shifting a baseband frequency of the carrier wave signal to a different bandwidth.

According to an optional implementation, after shifting the baseband frequency of the carrier wave signal, a difference between the first characteristic value and the second characteristic value remains constant. According to another optional implementation, after shifting the baseband frequency of the carrier wave signal, a difference between the first characteristic value and the second characteristic value is changed.

According to an embodiment, the method further comprises receiving a hopping pattern indication comprising information related to the shift of the baseband frequency of the carrier wave signal and the circuitry, in operation, determines the shift of the baseband frequency according to the information comprised in the hopping pattern indication.

According to an embodiment, the characteristic is one of a frequency, an amplitude or a phase.

The method of the fourth aspect or any embodiment/implementation thereof may be implemented in the node according to the second aspect or any embodiment/implementation thereof.

According to a fifth aspect, it is provided a method for an Internet of Thing, loT, device, the method comprising receiving a carrier wave signal, generating a backscattering signal to be transmitted by backscattering the carrier wave signal, and changing a value of a characteristic of the backscattering signal at least between a first characteristic value and a second characteristic value within a modulation time interval, which defines a unit time interval for modulating the backscattering signal to transmit data.

According to an embodiment, the method further comprises transmitting a first data signal, which is generated by modulating a first part of the backscattering signal, which is transmitted with the first characteristic value, based on first data and transmitting a second data signal, which is generated by modulating a second part of the backscattering signal, which is transmitted with the second characteristic value, based on second data. In an optional implementation the first data and the second data are same.

According to an embodiment, the method further comprises changing the characteristic of the backscattering signal according to a changing pattern, wherein the changing pattern includes at least one of the first characteristic value and the second characteristic value, a first duration for applying the first characteristic value and a second duration for applying the second characteristic value, a difference between the first characteristic value and the second characteristic value, an offset to be applied after a change between the first characteristic value and the second characteristic value, and a duration of the modulation time interval.

According to an embodiment, the changing pattern is pre-configured or the method further comprises receiving a changing pattern indication comprising information related to the changing pattern.

According to an embodiment, the changing pattern is determined according to a device identifier, ID, of the loT device.

According to an embodiment, the method further comprises after determining completion of the reception of data or after determining completion of the transmission of data, shifting a baseband frequency of the backscattering signal to a different bandwidth.

In an optional implementation, after shifting the baseband frequency of the backscattering signal, a difference between the first characteristic value and the second characteristic value remains constant. In another optional implementation, after shifting the baseband frequency of the backscattering signal, a difference between the first characteristic value and the second characteristic value is changed. In another optional implementation, the transceiver, in operation, receives a hopping pattern indication comprising information related to the shift of the baseband frequency of the backscattering signal and the circuitry, in operation, determines the shift of the baseband frequency of the backscattering signal according to information comprised in the hopping pattern indication.

According to an embodiment, the characteristic is one of a frequency, an amplitude or a phase.

The method of the fifth aspect or any embodiment/implementation thereof may be implemented in the loT device according to the second aspect or any embodiment/implementation thereof.

## Claims

1. A node, comprising
a transceiver; and
circuitry which, in operation, generates a carrier wave signal to be transmitted to an Internet of Thing, loT, device;
wherein the circuitry, in operation, changes a value of a characteristic of the carrier wave signal at least between a first characteristic value and a second characteristic value during a modulation time interval, which defines a unit time interval for modulating the carrier wave signal to transmit data.

2. The node according to claim 1, wherein the circuitry, in operation, determines the first characteristic value and the second characteristic value based on a reception capability of the loT device.

3. The node according to one of claims 1 or 2, wherein the circuitry, in operation, determines the first characteristic value based on a reception capability of a first loT device and the second characteristic value based on a reception capability of a second loT device.

4. The node according to one of claims 1 to 3, wherein the transceiver, in operation,
transmits to or receives from a first loT device a first data signal, which is generated by modulating a first part of the carrier wave, which is transmitted with the first characteristic value, based on first data; and
transmits to or receives from a second loT device a second data signal, which is generated by modulating a second part of the carrier wave, which is transmitted with the second characteristic value, based on second data.

5. The node according to one of claims 1 to 4, wherein the circuitry, in operation changes the characteristic of the carrier wave signal according to a changing pattern, wherein the changing pattern defines at least one of
the first characteristic value and the second characteristic value;
a first duration for applying the first characteristic value and a second duration for applying the second characteristic value;
a difference between the first characteristic value and the second characteristic value;
an offset to be applied after a change between the first characteristic value and the second characteristic value; and
a duration of the modulation time interval.

6. The node according to claim 5, wherein the changing pattern is pre-configured or wherein the transceiver, in operation, receives a changing pattern indication comprising information related to the changing pattern.

7. The node according to one of claims 1 to 6, wherein the circuitry, in operation, after determining completion of the reception of data or after determining completion of the transmission of data, shifts a baseband frequency of the carrier wave signal to a different bandwidth;
optionally, wherein after shifting the baseband frequency of the carrier wave signal, a difference between the first characteristic value and the second characteristic value remains constant; or
optionally, wherein after shifting the baseband frequency of the carrier wave signal, a difference between the first characteristic value and the second characteristic value is changed.

8. The node according to claim 7, wherein the transceiver, in operation, receives a hopping pattern indication comprising information related to the shift of the baseband frequency of the carrier wave signal; and
wherein the circuitry, in operation, determines the shift of the baseband frequency according to the information comprised in the hopping pattern indication.

9. An Internet of Thing, loT, device, comprising
a transceiver which, in operation, receives a carrier wave signal; and
circuitry, which in operation, generates a backscattering signal to be transmitted by backscattering the carrier wave signal;
wherein the circuitry, in operation, changes a value of a characteristic of the backscattering signal at least between a first characteristic value and a second characteristic value within a modulation time interval, which defines a unit time interval for modulating the backscattering signal to transmit data.

10. The loT device according to claim 9, wherein the transceiver, in operation,
transmits a first data signal, which is generated by modulating a first part of the backscattering signal, which is transmitted with the first characteristic value, based on first data; and
transmits a second data signal, which is generated by modulating a second part of the backscattering signal, which is transmitted with the second characteristic value, based on second data;
optionally wherein the first data and the second data are same.

11. The loT device according to one of claims 9 or 10, wherein the circuitry, in operation, changes the characteristic of the backscattering signal according to a changing pattern, wherein the changing pattern includes at least one of
the first characteristic value and the second characteristic value;
a first duration for applying the first characteristic value and a second duration for applying the second characteristic value;
a difference between the first characteristic value and the second characteristic value;
an offset to be applied after a change between the first characteristic value and the second characteristic value; and
a duration of the modulation time interval.

12. The loT device according to claim 11, wherein the changing pattern is pre-configured or wherein the transceiver, in operation, receives a changing pattern indication comprising information related to the changing pattern.

13. The loT device according to one of claims 11 or 12, wherein the changing pattern is determined according to a device identifier, ID, of the loT device.

14. The loT device according to one of claims 9 to 13, wherein the circuitry, in operation, after determining completion of the reception of data or after determining completion of the transmission of data, shifts a baseband frequency of the backscattering signal to a different bandwidth;
optionally, wherein after shifting the baseband frequency of the backscattering signal, a difference between the first characteristic value and the second characteristic value remains constant; or
optionally, wherein after shifting the baseband frequency of the backscattering signal, a difference between the first characteristic value and the second characteristic value is changed; and
optionally, wherein the transceiver, in operation, receives a hopping pattern indication comprising information related to the shift of the baseband frequency of the backscattering signal; and wherein the circuitry, in operation, determines the shift of the baseband frequency of the backscattering signal according to information comprised in the hopping pattern indication.

15. The node according to one of claims 1 to 8 or the loT device according to one of claims 9 to 14, wherein the characteristic is one of a frequency, an amplitude or a phase.
